# EUROPÄISCHE PATENTANMELDUNG

(11) **EP 3 498 407 A1**
(43) Veröffentlichungstag der Anmeldung: **19.06.2019**
(21) Anmeldenummer: 18206029.3
(22) Anmeldetag: 13.11.2018
(51) Int. Cl.: B23G 1/34, B23G 1/24, B23C 3/32, B23C 5/28, B23Q 11/10

(54) **WIRBELVORRICHTUNG**

(30) Priorität: 18.12.2017 CH 15462017
(71) Anmelder: PCM Willen SA, 1844 Villeneuve (CH)
(72) Erfinder: Berchtold, Stephan, 3302 Moossee (CH)
(74) Vertreter: Kaminski Harmann Patentanwälte AG (Schweiz)

(57) **Zusammenfassung**

Die Wirbelvorrichtung (1) umfasst einen sich um eine Ringachse (A1) und eine zentrale Öffnung (3) erstreckenden Haltering (2) mit mindestens einem Aufnahmebereich (4) für ein Bearbeitungselement (5) zum Bearbeiten von stabförmigem Material im Bereich der zentralen Öffnung (3). Eine Kühlmittelzuführung (7) umfasst eine Zuführhülse (8), die über eine Drehlagerung am Haltering (2) angeordnet ist und einen Kühlmittelanschluss (9) sowie einen an einen Anschlussbereich (16) des Halterings (2) anschliessenden Speisebereich (10) umfasst. Ausgehend von mindestens einer Eintrittsöffnung (17) im Anschlussbereich (16) des Halterings (2) führt mindestens eine Durchführung (18) durch den Haltering (2) zu mindestens einer Austrittsöffnung (19), welche der zentralen Öffnung (3) des Halterings (2) zugewandt ist und bei einem Aufnahmebereich (4) für ein Bearbeitungselement (5) ausgebildet ist. Für die Kühlmittelzuführung wird kein Platz zwischen dem Haltering (2) und einer zugeordneten Drehmaschine benötig.

## Beschreibung

Die Erfindung bezieht sich auf Wirbelvorrichtungen nach dem Oberbegriff des Anspruchs 1. Wirbelvorrichtungen werden zum Bearbeiten von stabförmigem Material eingesetzt, insbesondere zum Ausbilden von Gewinden.

Gängige Wirbelvorrichtungen werden etwa als Gewindewirbelvorrichtungen bezeichnet und umfassen zumindest einen ringförmigen Halter an dem Bearbeitungselemente, insbesondere Schneidplatten, so zu befestigen sind, dass sie stabförmiges Material im Bereich der zentralen Öffnung im ringförmigen Halter bearbeiten können. WO 2017/ 042061 A1 und EP 1 902 804 A2 zeigen Beispiele solcher ringförmiger Halter, die als Halteringe bezeichnet werden können.

WO 2013/038028 A1 zeigt eine Gewindewirbelvorrichtung, bei welcher der Haltering an einer Spindelhülse befestigt wird, wobei die Spindelhülse an einer Tragvorrichtung um eine erste Achse drehbar gelagert ist. Die Tragvorrichtung ist so ausgebildet, dass die Spindelhülse um eine zweite Achse schwenkbar ist, wobei die beiden Achsen im Wesentlichen senkrecht zueinander ausgerichtet sind. Die Tragvorrichtung ist so an einer Drehmaschine anbringbar, dass von der Drehmaschine in Drehung versetztes stabförmiges Material von am Haltering befestigten Bearbeitungselementen bearbeitet werden kann. Bei der Bearbeitung entstehen Späne und Hitze, welche abgeführt werden müssen. Dazu wird etwa wie in DD 20886 dargestellt von der von der Spindelhülse abgewandten Seite des Halterings über eine Kühlmittelzuführung in der Form einer Zuleitung mit gegen den Bereich mit den Bearbeitungswerkzeugen gerichtetem offenem Ende Kühlflüssigkeit gegen den Bearbeitungsbereich, bzw. gegen die zentrale Öffnung des Halterings, gespritzt. Für die Zuleitung wird Platz zwischen dem ringförmigen Träger und der Drehmaschine benötig. Entsprechend weit muss das stabförmige Material über die Drehmaschine vorstehen, was bei der Bearbeitung zu unerwünschten Schwingungen des stabförmigen Materials im Bereich der Bearbeitungselemente führen kann.

Die erfindungsgemässe Aufgabe besteht nun darin, eine Wirbelvorrichtung zu finden, bei der die Kühlung ohne störenden Platzbedarf erzielbar ist.

Die Aufgabe wird durch die Merkmale des Patentanspruchs 1 gelöst. Die abhängigen Patentansprüche beschreiben alternative bzw. vorteilhafte Ausführungsvarianten, welche weitere Aufgaben lösen.

Die erfindungsgemässe Wirbelvorrichtung umfasst einen sich um eine Ringachse und eine zentrale Öffnung erstreckenden Haltering mit mindestens einem Aufnahmebereich für ein Bearbeitungselement mit einem Eingriffsbereich zum Bearbeiten von stabförmigem Material im Bereich der zentralen Öffnung. Eine Kühlmittelzuführung umfasst eine Zuführhülse, die über eine Drehlagerung am Haltering angeordnet ist und einen Kühlmittelanschluss sowie einen an einen Anschlussbereich des Halterings anschliessenden Speisebereich umfasst. Ausgehend von mindestens einer Eintrittsöffnung im Anschlussbereich des Halterings führt mindestens eine Durchführung durch den Haltering zu mindestens einer Austrittsöffnung, welche der zentralen Öffnung des Halterings zugewandt ist und bei einem Aufnahmebereich für ein Bearbeitungselement ausgebildet ist.

Für die Kühlmittelzuführung wird kein Platz zwischen dem Haltering und einer zugeordneten Drehmaschine benötig. Entsprechend muss das stabförmige Material nur minimal über die Drehmaschine vorstehen, was bei der Bearbeitung störende Schwingungen des stabförmigen Materials im wesentlichen ausschliesst. Weil die mindestens eine Austrittsöffnung aus der die Kühlflüssigkeit austritt direkt bei der zentralen Öffnung des Halterings und damit sehr nahe beim zu kühlenden Eingriffsbereich angeordnet ist, kann die Kühlflüssigkeit äusserst effizient eingesetzt werden.

Die am Haltering angeordnete Zuführhülse stellt sicher, dass das Kühlmittel vom Kühlmittelanschluss zum Speisebereich und von diesem zum Anschlussbereich des Halterings gelangt.

Gemäss einer bevorzugten Ausführungsform erstreckt sich die Zuführhülse in Richtung der Ringachse radial aussen über einen Abschnitt des Halterings. Vorzugsweise ist die Zuführhülse in Richtung der Ringachse am Haltering positioniert indem bei beiden Stirnseiten der Zuführhülse sich in radialer Richtung zur Ringachse erstreckende erste Positionsflächen in axialer Richtung an radial vor- oder zurückstehende am Haltering ausgebildete zweite Positionsflächen anschliessen.

Um die Positionsflächen in die zur Positionierung nötige Lage zu bringen kann die Zuführhülse oder der Haltering zweiteilig ausgebildet werden. Das zweiteilige Element wird dann von zwei entgegen gesetzten Seiten am anderen Element angeordnet und mit einer Verbindung werden die beiden Teile des zweiteiligen Elements in gegenseitigem Kontakt gehalten. Wenn die Zuführhülse zwischen zwei Positionsflächen des Halterings positioniert ist, so umfasst der Haltering vorzugsweise einen Abschlussring, der nach dem Aufsetzen auf einen Bereich des Halterings so an die Zuführhülse anschliesst, dass die Zuführhülse auf dem Haltering gehalten wird.

Bei bevorzugten Ausführungsformen ist der Anschlussbereich des Halterings an einer radial nach aussen gerichteten Ringfläche ausgebildet. Der an den nach aussen gerichteten Anschlussbereich des Halterings anschliessbare Speisebereich der Kühlmittelzuführung schliesst radial aussen an den Anschlussbereich an. Wenn nun das Kühlmittel unter Druck vom Speisebereich zum Anschlussbereich gelangt, so entstehen zwischen der Kühlmittelzuführung und dem Haltering im Wesentlichen keine Kräfte mit Komponenten in Richtung der Ringachse.

Die aufgrund des Kühlmitteldrucks zwischen der Kühlmittelzuführung und dem Haltering entstehenden Kräfte sind im Wesentlichen senkrecht zur Ringachse ausgerichtet. Resultierende radiale Kräfte, welche Bereiche des Halterings und der Kühlmittelzuführung aneinander drücken würden, werden bei bevorzugten Ausführungen dadurch vermieden, dass der Anschlussbereich des Halterings und der daran anschliessbare Speisebereich der Kühlmittelzuführung sich ringförmig geschlossen um die Ringachse erstrecken und so ausgebildet sind, dass entstehende Kräfte bezüglich der Ringachse im Wesentlichen punktsymmetrisch ausgebildet sind. Das unter Druck zugeführte Kühlmittel bildet zwischen dem Anschlussbereich des Halterings und dem daran anschliessenden Speisebereich der Kühlmittelzuführung einen schwimmend lagernden Ringbereich, der auch hohe Drehzahlen zwischen der Zuführhülse und dem Haltering ohne störende Abnützung ermöglicht.

Bei einer besonders bevorzugten Ausführungsform ist die Ringfläche des Anschlussbereichs an der Aussenfläche mindestens eines zylinderförmigen Abschnitts des Halterings ausgebildet. Der Übergang des Kühlmittels vom Speisebereich zur mindestens einen Eintrittsöffnung zu einer Durchführung durch den Haltering wird dadurch verbessert, dass in der Ringfläche des Anschlussbereichs eine ringförmige Nut ausgebildet ist, wobei die mindestens eine Eintrittsöffnung in dieser Nut angeordnet ist. Vorzugsweise ist auch im Speisebereich eine Nut ausgebildet, die direkt an die Nut des Anschlussbereichs angrenzt, so dass Kühlmittel in diesen beiden Nuten um die Ringachse verteilt in alle Eintrittsöffnungen eintritt.

Weil bei der Bearbeitung von stabförmigem Material im Bereich der zentralen Öffnung des Halterings jeweils nur ein Teil der Bearbeitungselemente mit ihren Eingriffsbereichen im Eingriff zum zu bearbeitenden Material sind, wird die Kühlflüssigkeit vor allem bei diesen Bearbeitungselementen benötigt. Um die nötige Zuführung von Kühlflüssigkeit zu reduzieren, kann der Speisebereich vorzugsweise auf einen Umfangsbereich mit in Eingriff zum bearbeiteten Material stehenden Bearbeitungselementen reduziert werden.

Damit die beschriebene Fluidlagerung zur Ringachse spiegelsymmetrisch ausgebildet wird, ist es zweckmässig den Speisebereich auch bei einem Umfangsbereich auszubilden, der vom Umfangsbereich mit in Eingriff zum bearbeiteten Material stehenden Bearbeitungselementen abgewandt ist. Wenn die nötige Kühlmittelzuführung besonders klein gehalten werden soll, kann zur Lagerung mindestens eine von mindestens einer Nut gebildete Kühlmittel-Lagerung vorgesehen werden, die axial versetzt zu den Eintrittsöffnungen ausgebildet ist. So kann sichergestellt werden, dass Kühlmittel nur zur Lagerung sowie bei den arbeitenden Bearbeitungselementen eingesetzt wird.

Die oben erwähnte Positionierung der Zuführhülse in Achsrichtung am Haltering umfasst bei beiden Stirnseiten der Zuführhülse sich in radialer Richtung zur Ringachse erstreckende erste Positionsflächen, die an radial vor- oder zurückstehende am Haltering ausgebildete zweiten Positionsflächen anschliessen. Diese aneinander anschliessenden Positionsflächen schliessen auch den sich in Richtung der Ringachse erstreckenden Ringbereich zwischen dem Anschlussbereich und der Zuführhülse ab, also den Bereich in dem sich Kühlmittel befindet. Die zentrierte Positionierung der Zuführhülse am Haltering wird somit auch durch den Druck des Kühlmittels gewährleistet. Zudem reduzieren die Positionsflächen den Austritt von Kühlmittel. Es hat sich gezeigt, dass für einen genügend kleinen Austrittsverlust von Kühlmittel keine Dichtungen nötig sind. Der Verzicht auf Dichtungen erlaubt eine höhere Drehzahl, weil ja die entstehende Hitze nicht zur Zerstörung von Dichtungen führen kann. Vorzugsweise wird zumindest ein Teil der Oberflächen des Halterings und der Zuführhülse, die einander zugewandt sind, so beschichtet, dass ein Anfressen selbst bei fehlendem Kühlmittel verhindert werden kann. Das Kühlmittel gewährleistet eine schwimmende Lagerung und kühlt auch die gegeneinander drehenden Bereiche des Halterings und der Zuführhülse.

Die im Anschlussbereich des Halterings von der mindestens einen Eintrittsöffnung ausgehende mindestens eine Durchführung zur mindestens einen Austrittsöffnung bei der zentralen Öffnung des Halterings umfasst einen ersten Abschnitt, dessen Längsachse vorzugsweise in einem Abstand zur Ringachse verläuft. Wenn der Haltering so dreht, dass die Eintrittsöffnung dem ersten Abschnitt voraus geht, so wird Kühlflüssigkeit von der Wand des ersten Abschnitts so beschleunigt, dass nebst der Zentrifugalkraft auch eine kleine Beschleunigungskomponente radial nach innen zu beachten ist. Die Beschleunigungskomponente radial nach innen reduziert den Effekt der Zentrifugalkraft und damit auch den Speisedruck, der nötig ist um die Kühlflüssigkeit von der Eintrittsöffnung durch den drehenden Haltering nach innen zur Austrittsöffnung bei der zentralen Öffnung im Haltering zu fördern.

Die mindestens eine Durchführung ist vorzugsweise in einem zweiten Abschnitt bei der Austrittsöffnung anders ausgerichtet als im ersten Abschnitt. Die Ausrichtung im zweiten Abschnitt ist so gewählt, dass die Kühlflüssigkeit nach dem Austritt aus der Austrittsöffnung zum Eingriffsbereich eines Bearbeitungselements gelangt und dort die gewünschte Kühlwirkung sowie das Wegspülen des vom stabförmigen Material abgetragenen Materials gewährleistet.

Der Haltering mit relativ zu diesem drehbar daran angeordneter Kühlmittelzuführung kann so ausgebildet werden, dass er in den bekannten Vorrichtungen einsetzbar ist. Es können gängige Wirbelvorrichtungen bzw. Wirbelringe ohne Kühlung durch erfindungsgemässe Wirbelvorrichtungen ersetzt werden. Die erfindungsgemässe Lösung umfasst nebst der Kühlmittelzuführung in der Form einer nur in radialer Richtung beim Haltering etwas Platz beanspruchenden Zuführhülse weiterhin einen gut zugänglichen Haltering. Dieser kann so ausgestaltet werden, dass er die gängigen Verbindungsmöglichkeiten zur Spindelhülse zulässt. Nach dem Wechsel zu einem Haltering mit integrierter Kühlung können die Bearbeitungen mit höheren Drehzahlen durchgeführt werden, weil die Wärme und gegebenenfalls abgetragene Späne viel besser beseitigt werden.

Eine bevorzugte Wirbelvorrichtung, die direkt bei einer Drehmaschine angebracht werden kann, umfasst zusätzlich eine Spindelhülse und eine Tragvorrichtung, wobei der Haltering an der Spindelhülse befestigbar ist, die Spindelhülse an der Tragvorrichtung um die Ringachse drehbar gelagert ist, die Tragvorrichtung so ausgebildet ist, dass die Spindelhülse um die Ringachse antreibbar und um eine Einstellachse schwenkbar ist, wobei die Ringachse und die Einstellachse im Wesentlichen senkrecht zueinander ausgerichtet sind. Mit der einstellbaren Schwenkausrichtung um die Einstellachse wird festgelegt, unter welchem Winkel zum zugeführten stabförmigen Material eine zentrale Ebene des Halterings ausgerichtet ist. Die Tragvorrichtung umfasst vorzugsweise eine Drehübertragung, welche eine Drehbewegung von der Antriebsseite zur Spindelhülse überträgt.

Die Drehübertragung umfasst beispielsweise eine von der Antriebsseite ausgehende parallel zur Einstellachse verlaufende in der Tragvorrichtung drehbar gelagerte erste Welle. Wenn die Achse der ersten Welle auf der Einstellachse liegt, kann die Ausrichtung der Ringachse geändert werden, ohne dass dies die Befestigung und das Antreiben der ersten Welle beeinträchtigt. Auch der Haltering liegt im Wesentlichen in einem Bereich durch dessen Zentrum die Einstellachse führt. Deshalb verbleibt der Haltering auch beim Ändern der Ausrichtung der Ringachse im Wesentlichen am gleichen Ort. Die Antriebsübertragung von der ersten Welle zur Spindelhülse erfolgt vorzugsweise über eine drehbar in der Tragvorrichtung gelagerte zweite Welle, die senkrecht zur ersten Welle ausgerichtet ist, wobei die beiden Wellen mit zwei ineinandergreifenden Kegelrädern die Drehübertragung gewährleisten. Ein auf der zweiten Welle angeordnetes Zahnrad kann über ein an der Spindelhülse angeordnetes Zahnrad die Drehbewegung auf die Spindelhülse übertragen.

Die Zuführung des Kühlmittels zum Kühlmittelanschluss der Kühlmittelzuführung erfolgt vorzugsweise über einen Anschluss an der Tragvorrichtung. Dadurch kann sichergestellt werden, dass die erfindungsgemässe Wirbelvorrichtung problemlos an bestehenden Tragvorrichtungen angeordnet werden kann, bei denen bisher über eine Leitung mit offenem Ende Kühlflüssigkeit gegen den Bereich mit den Bearbeitungswerkzeugen gespritzt wurde. Die Kühlmittelleitungen bzw. Verbindungen umfassen Schnellwechselanschlüsse, die auch bei hohem Druck, beispielsweise bei 150bar, einsetzbar sind.

Die Zeichnungen erläutern die Erfindung anhand eines Ausführungsbeispiels, auf das sie aber nicht eingeschränkt ist. Dabei zeigen
- Fig. 1: eine perspektivische Explosionszeichnung einer Wirbelvorrichtung mit Tragvorrichtung,
- Fig. 2: eine perspektivische Darstellung einer Zuführhülse und eines Halterings,
- Fig. 3: einen Ausschnitt eines Längsschnitts durch eine gelagerte Spindelhülse und einen Haltering mit Zuführhülse, und
- Fig. 4: einen Querschnitt durch einen Haltering mit Zuführhülse.

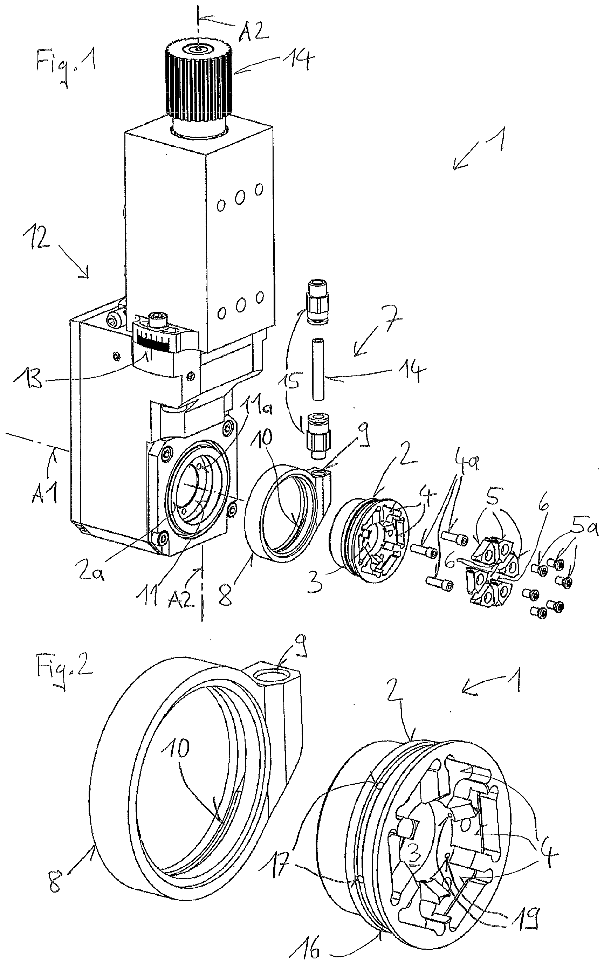

Fig. 1 zeigt eine Wirbelvorrichtung 1, die direkt bei einer Drehmaschine angebracht werden kann. Sie umfasst einen Haltering 2, der sich um eine Ringachse A1 und eine zentrale Öffnung 3 erstreckt. Am Haltering 2 sind Aufnahmebereiche 4 für Bearbeitungselemente 5 ausgebildet. Die Bearbeitungselemente 5 umfassen Eingriffsbereiche 6, mit denen stabförmiges Material im Bereich der zentralen Öffnung 3 bearbeitet werden kann. Die Bearbeitungselemente 5 werden mit den Befestigungsschrauben 5a am Haltering 2 befestigt, wozu im Haltering 2 Gewinde 5b ausgebildet sind. Eine Kühlmittelzuführung 7 umfasst eine Zuführhülse 8 mit einem Kühlmittelanschluss 9 und einem Speisebereich 10. Die Zuführhülse 8 ist über eine Drehlagerung am Haltering 2 angeordnet.

Der Haltering 2 wird mit aufgesetzter Zuführhülse 8 an einer Spindelhülse 11 befestigt. Eine Befestigung umfasst beispielsweise drei Verbindungsschrauben 4a, die in Gewinden 11a der Spindelhülse 11 festgeschraubt werden. In der dargestellten Ausführungsform umfasst der Haltering 2 einen Abschlussring 2a, der den Bereich des Halterings 2 mit der Zuführhülse 8 so abschliesst, dass die Zuführhülse 8 auf dem Haltering 2 in der gewünschten Position gehalten wird. Der Abschlussring 2a wird von den Verbindungsschrauben 4a zwischen dem Haltering 2 und der Spindelhülse 11 festgeklemmt. Es wäre auch möglich, dass die Stirnfläche der Spindelhülse die Funktion des Abschlussrings 2a übernimmt.

Die Spindelhülse ist an einer Tragvorrichtung 12 um die Ringachse A1 drehbar gelagert. Die Tragvorrichtung 12 ist so ausgebildet, dass die Spindelhülse 11 um die Ringachse A1 antreibbar und um eine Einstellachse A2 schwenkbar ist, wobei die Ringachse A1 und die Einstellachse A2 im Wesentlichen senkrecht zueinander ausgerichtet sind. Mit der an einer Einstelleinrichtung 13 einstellbaren Schwenkausrichtung um die Einstellachse A2 wird festgelegt, unter welchem Winkel zur Längsachse des zugeführten stabförmigen Materials eine zentrale Ebene des Halterings 2 ausgerichtet ist.

Die Tragvorrichtung 12 umfasst vorzugsweise eine Drehübertragung, welche eine Drehbewegung von der Antriebsseite 14 zur Spindelhülse 11 überträgt. Die Drehübertragung umfasst beispielsweise eine von der Antriebsseite 14 ausgehende parallel zur Einstellachse A2 verlaufende in der Tragvorrichtung 12 drehbar gelagerte erste Welle. Weil die Achse der ersten Welle und auch der Haltering 2 im Wesentlichen auf der Einstellachse A2 liegt, kann die Ausrichtung der Ringachse A1 geändert werden und der Haltering 2 bleibt in anderer Ausricht im Wesentlichen am gleichen Ort. Die Antriebsübertragung von der ersten Welle zur Spindelhülse 11 erfolgt vorzugsweise über eine drehbar in der Tragvorrichtung 12 gelagerte zweite Welle, die senkrecht zur ersten Welle ausgerichtet ist, wobei die beiden Wellen mit zwei ineinandergreifenden Kegelrädern die Drehübertragung gewährleisten. Ein auf der zweiten Welle angeordnetes Zahnrad kann über ein an der Spindelhülse angeordnetes Zahnrad die Drehbewegung auf die Spindelhülse 11 übertragen.

Die Zuführung des Kühlmittels zum Kühlmittelanschluss 9 der Kühlmittelzuführung 7 erfolgt vorzugsweise über einen Anschluss an der Tragvorrichtung 12. Dazu ist eine Kühlmittelleitung 14 mit Schnellwechselanschlüssen 15 zwischen dem Kühlmittelanschluss 9 und einem nicht dargestellten Anschluss an der Tragvorrichtung 12 eingesetzt.

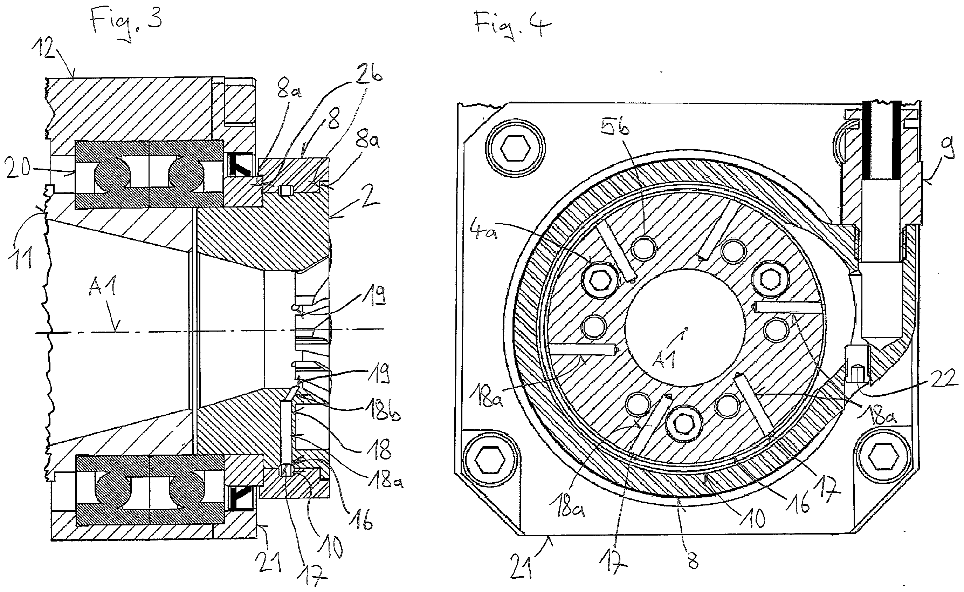

Auf Fig. 2 sind die Details des Halterings 2 und der Zuführhülse 8 gut erkennbar. Die gegen die Ringachse A1 gerichtete Innenseite der Zuführhülse 8 ist so an die von der Ringachse A1 abgewandte Aussenseite des Halterings 2 angepasst, dass zwischen diesen beiden Teilen eine Drehlagerung ausgebildet ist. An einer radial nach aussen gerichteten Ringfläche des Halterings 2 ist ein Anschlussbereich 16 ausgebildet, in welchem Eintrittsöffnungen 17 zu Durchführungen 18 (vgl. Fig. 3) durch den Haltering 2 angeordnet sind. Die Durchführungen 18 führen zu Austrittsöffnungen 19, die der zentralen Öffnung 3 des Halterings 2 zugewandt und bei Aufnahmebereichen 4 für Bearbeitungselemente angeordnet sind.

Fig. 3 zeigt den Haltering 2 mit der Zuführhülse 8 nach der Befestigung an der Spindelhülse 11. Die Zuführhülse 8 erstreckt sich in Richtung der Ringachse A1 radial aussen über einen Abschnitt des Halterings 2. Die Zuführhülse 8 ist in Richtung der Ringachse A1 am Haltering 2 positioniert, indem bei beiden Stirnseiten der Zuführhülse 8 sich in radialer Richtung zur Ringachse erstreckende erste Positionsflächen 8a in axialer Richtung an radial vorstehende am Haltering 2 ausgebildete zweite Positionsflächen 2b anschliessen. Eine der beiden zweiten Positionsflächen 2b ist am Abschlussring 2a ausgebildet, der den Bereich des Halterings 2 mit der Zuführhülse 8 so abschliesst, dass die Zuführhülse 8 auf dem Haltering 2 in der gewünschten Position gehalten wird. Zudem reduzieren die Positionsflächen 8a und 2b den Austritt von Kühlmittel. In der dargestellten Ausführung wird der Abschlussring 2a zwischen dem Haltering 2 und einem Drehlager 20, bzw. der an der Spindelhülse 11 befestigten Seite des Drehlagers 20, festgeklemmt. Das Drehlager 20 wird von einer Platte 21 an der Tragvorrichtung 12 gehalten. Es versteht sich von selbst, dass der Abschlussring 2a als Teil des Halterings 2 auch direkt an diesem befestigt werden kann.

An den nach aussen gerichteten Anschlussbereich 16 des Halterings 2 schliesst radial aussen der Speisebereich 10 der Zuführhülse 8 an. Wenn nun das Kühlmittel unter Druck vom Speisebereich 10 zum Anschlussbereich 16 gelangt, so entstehen zwischen der Zuführhülse 8 und dem Haltering 2 im Wesentlichen keine Kräfte mit Komponenten in Richtung der Ringachse A1. Die entstehenden Kräfte sind im Wesentlichen senkrecht zur Ringachse A1 ausgerichtet. Resultierende radiale Kräfte, welche Bereiche des Halterings 2 und der Kühlmittelzuführung 7 aneinander drücken würden, werden dadurch vermieden, dass der Anschlussbereich 16 und der Speisebereich 10 sich ringförmig geschlossen um die Ringachse A1 erstrecken. Das unter Druck zugeführte Kühlmittel bildet ausgehend vom Anschlussbereich 16 und vom Speisebereich 10 eine schwimmende Lagerung, die auch hohe Drehzahlen zwischen der Zuführhülse 8 und dem Haltering 2 ohne störende Abnützung ermöglicht.

Der Anschlussbereich 16 ist als Nut an der Aussenfläche eines zylinderförmigen Abschnitts des Halterings 2 ausgebildet. Die Eintrittsöffnungen 17 sind in dieser Nut angeordnet. Auch der Speisebereich 10 ist als Nut ausgebildet, die direkt an die Nut des Anschlussbereichs 16 angrenzt, so dass Kühlmittel vom Kühlmittelanschluss 9 über diese beiden Nuten zu allen Eintrittsöffnungen 17 gelangt.

Weil bei der Bearbeitung von stabförmigem Material im Bereich der zentralen Öffnung 3 des Halterings 2 jeweils nur ein Teil der Bearbeitungselemente 5 mit ihren Eingriffsbereichen 6 im Eingriff zum zu bearbeitenden Material sind, wird die Kühlflüssigkeit vor allem bei diesen Bearbeitungselementen benötigt. Um die nötige Zuführung von Kühlflüssigkeit zu reduzieren, kann bei einer speziellen Ausführungsform die Nut des Speisebereichs 10 auf einen Umfangsbereich mit in Eingriff zum bearbeiteten Material stehenden Bearbeitungselementen reduziert werden. Zudem wird dann beim Anschlussbereich 16 auf eine Nut verzichtet, so dass jeweils nur die Eintrittsöffnungen 17 im Bereich der Nut des Speisebereichs 10 mit genügend Speiseflüssigkeit versorgt werden. Damit die entstehende Fluidlagerung zur Ringachse A1 spiegelsymmetrisch ausgebildet wird, ist es zweckmässig einen weiteren Nutabschnitt des Speisebereichs 10 dem ersten Nutabschnitt gegenüberliegend auszubilden, vorzugsweise in Richtung der Ringachse A1 so versetzt, dass der weitere Nutabschnitt zu den Eintrittsöffnungen 17 versetzt ist. Gegebenenfalls wird aber zur Lagerung eine zusätzliche Ringnut verwendet.

Die im Anschlussbereich 16 des Halterings 2 von den Eintrittsöffnungen 17 ausgehenden Durchführungen 18 zu den Austrittsöffnungen19 umfassen gemäss Fig. 4 einen ersten Abschnitt 18a, dessen Längsachse vorzugsweise in einem Abstand zur Ringachse A1 verläuft. Wenn der Haltering 2 so dreht, dass die Eintrittsöffnung 17 dem ersten Abschnitt 18a voraus geht, so wird Kühlflüssigkeit von der Wand des ersten Abschnitts 18a so beschleunigt, dass nebst der Zentrifugalkraft auch eine kleine Beschleunigungskomponente radial nach innen zu beachten ist. Die Beschleunigungskomponente radial nach innen reduziert den Effekt der Zentrifugalkraft und damit auch den Speisedruck, der nötig ist um die Kühlflüssigkeit von einer Eintrittsöffnung 17 durch den drehenden Haltering 2 nach innen zur entsprechenden Austrittsöffnung 19 zu fördern. Gegebenenfalls wird eine Anschlussöffnung 22 in der Zuführhülse 8 ausgebildet, an der beispielsweise ein Drucksensor, ein Überdruckventil oder eine Kühlmittelweiterführung angeschlossen werden kann. Wenn die Anschlussöffnung 22 nicht benötigt wird, kann sie wie dargestellt mit einer Schraube verschlossen werden.

Die Durchführungen 18 sind in einem zweiten Abschnitt 18b bei den Austrittsöffnungen 19 anders ausgerichtet als im ersten Abschnitt 18a. Die Ausrichtung im zweiten Abschnitt 18b ist so gewählt, dass die Kühlflüssigkeit nach dem Austritt aus der Austrittsöffnung 19 zum Eingriffsbereich eines Bearbeitungselements gelangt.

## Patentansprüche

1. Wirbelvorrichtung (1) mit einem sich um eine Ringachse (A1) und eine zentrale Öffnung (3) erstreckenden Haltering (2), der mindestens einen Aufnahmebereich (4) für ein Bearbeitungselement (5) mit Eingriffsbereich (6) zum Bearbeiten von stabförmigem Material im Bereich der zentralen Öffnung (3) umfasst, und mit einer Kühlmittelzuführung (7), **dadurch gekennzeichnet, dass** die Kühlmittelzuführung (7) eine Zuführhülse (8) umfasst, die über eine Drehlagerung am Haltering (2) angeordnet ist und einen Kühlmittelanschluss (9) sowie einen an einen Anschlussbereich (16) des Halterings (2) anschliessenden Speisebereich (10) umfasst, wobei ausgehend von mindestens einer Eintrittsöffnung (17) im Anschlussbereich (16) des Halterings (2) mindestens eine Durchführung (18) durch den Haltering (2) zu mindestens einer Austrittsöffnung (19) führt, welche Austrittsöffnung (19) der zentralen Öffnung (3) des Halterings (2) zugewandt ist und bei einem Aufnahmebereich (4) für ein Bearbeitungselement (5) ausgebildet ist.

2. Wirbelvorrichtung (1) nach Anspruch 1, **dadurch gekennzeichnet, dass** die Zuführhülse (8) sich in Richtung der Ringachse (A1) radial aussen über einen Abschnitt des Halterings (2) erstreckt.

3. Wirbelvorrichtung (1) nach Anspruch 2, **dadurch gekennzeichnet, dass** die Zuführhülse (8) in Achsrichtung am Haltering (2) positioniert ist, indem bei beiden Stirnseiten der Zuführhülse (8) sich in radialer Richtung zur Ringachse (A1) erstreckende erste Positionsflächen (8a) in axialer Richtung an radial vor- oder zurückstehende am Haltering (2) ausgebildete zweiten Positionsflächen (2b) anschliessen.

4. Wirbelvorrichtung (1) nach einem der Ansprüche 1 bis 3, **dadurch gekennzeichnet, dass** der Anschlussbereich (16) des Halterings (2) an einer radial nach aussen gerichteten Ringfläche ausgebildet ist.

5. Wirbelvorrichtung (1) nach Anspruch 4, **dadurch gekennzeichnet, dass** die Ringfläche des Anschlussbereichs (16) an der Aussenfläche mindestens eines zylinderförmigen Abschnitts des Halterings (2) ausgebildet ist.

6. Wirbelvorrichtung (1) nach Anspruch 5, **dadurch gekennzeichnet, dass** in der Ringfläche des Anschlussbereichs (16) eine ringförmige Nut ausgebildet ist und die mindestens eine Eintrittsöffnung (17) in dieser Nut angeordnet ist.

7. Wirbelvorrichtung (1) nach einem der Ansprüche 1 bis 6, **dadurch gekennzeichnet, dass** der Speisebereich (10) der Zuführhülse eine Nut umfasst, welche der mindestens einen Eintrittsöffnung (17) des Halterings (2) zugeordnet ist.

8. Wirbelvorrichtung (1) nach einem der Ansprüche 1 bis 7, **dadurch gekennzeichnet, dass** die mindestens eine Durchführung (18) ausgehend von der Eintrittsöffnung (17) einen ersten Abschnitt (18a) umfasst, dessen Längsachse in einem Abstand zur Ringachse (A1) verläuft.

9. Wirbelvorrichtung (1) nach Anspruch 8, **dadurch gekennzeichnet, dass** die mindestens eine Durchführung 18 in einem zweiten Abschnitt (18b) bei der Austrittsöffnung (19) anders ausgerichtet ist als im ersten Abschnitt (18a).

10. Wirbelvorrichtung (1) nach einem der Ansprüche 1 bis 9, **dadurch gekennzeichnet, dass** die Wirbelvorrichtung (1) eine Spindelhülse (11) und eine Tragvorrichtung (12) umfasst, wobei der Haltering (2) an der Spindelhülse (11) befestigbar ist, die Spindelhülse (11) an der Tragvorrichtung (12) um die Ringachse (A1) drehbar gelagert ist, die Tragvorrichtung (12) so ausgebildet ist, dass die Spindelhülse (11) um die Ringachse (A1) antreibbar und um eine Einstellachse (A2) schwenkbar ist, wobei die Ringachse (A1) und die Einstellachse (A2) im Wesentlichen senkrecht zueinander ausgerichtet sind.
